# EUROPÄISCHE PATENTSCHRIFT

(11) **EP 2 663 512 B1**
(45) Veröffentlichungstag und Bekanntmachung des Hinweises auf die Patenterteilung: **28.09.2016**
(21) Anmeldenummer: 11805762.9
(22) Anmeldetag: 01.12.2011
(51) Int. Cl.: B65D 75/58

(54) **AUSGIEßER UND BEHÄLTNIS MIT EINEM SOLCHEN**
SPOUT AND CONTAINER COMPRISING SAME
BEC VERSEUR ET RÉCIPIENT MUNI D'UN TEL BEC

(30) Priorität: 11.01.2011 DE 202011001356 U
(43) Veröffentlichungstag der Anmeldung: 20.11.2013
(73) Patentinhaber: Pöppelmann Holding GmbH & Co. KG., 49393 Lohne (DE)
(72) Erfinder: SCHICK, Werner, 49434 Neuenkirchen (DE)
(74) Vertreter: Busse & Busse
(86) Internationale Anmeldenummer: PCT/EP2011/006019
(87) Internationale Veröffentlichungsnummer: WO 2012/095127

(56) Entgegenhaltungen:
- EP-A1- 1 980 498
- US-A- 6 142 344
- US-A1- 2010 084 436
- US-B1- 6 273 307

## Beschreibung

Die vorliegende Erfindung betrifft einen Ausgießer gemäß dem Oberbegriff des Anspruchs 1, wie er aus der US 2009/285510 bekannt ist; insbesondere einen Einschweiß-Ausgießer mit einem einen Kanal zum Befüllen oder Entleeren eines Kunststoffbeutels ausbildenden Kunststoffkörper, der Seitenflächen aufweist, die zumindest bereichsweise voneinander weg weisen, mit einer Oberflächenstruktur versehen sind und an zwei Seiten ineinander übergehen, wobei die Seitenflächen zur Verbindung mit einer Kunststofffolie ausgebildet sind. Des Weiteren betrifft die Erfindung ein Behältnis umfassend einen Folienbeutel und einen solchen Ausgießer.

Aus dem Stand der Technik ist es bekannt, die Seitenflächen eines auch Schiffchen genannten Teils eines Einschweiß-Ausgießers mit einem Folienbeutel zu verschweißen. Zur optimalen Verbindung zwischen Ausgießer und Folienbeutel wurden die Seitenflächen des Schiffchen des Ausgießers im Stand der Technik mit einer Oberflächenstruktur einer bestimmten Rauigkeit versehen (EP 1 701 892 B1). Nachteilig bei dieser Art der Oberflächenstruktur der Seitenflächen des Schiffchens ist jedoch die mögliche Ausbildung von in Längsrichtung des Kanals verlaufenden Lufteinschlüssen oder Hohlkanälen, die zu Undichtigkeiten eines einen Folienbeutel und einen mit diesem verschweißten Ausgießer aufweisenden Beutels führen können. Darüber hinaus hat es sich gezeigt, dass beim Befüllen von größeren Beuteln die Verbindung zwischen Oberfläche und Folienbeutel durch zu starke Scherkräfte beschädigt werden kann.

Es ist daher Aufgabe der vorliegenden Erfindung, einen Ausgießer für ein Behältnis sowie ein zugehöriges Behältnis hinsichtlich seiner Tragfähigkeit sowie seiner Dichtigkeit verbessert auszubilden.

Die Aufgabe wird gelöst durch einen Gegenstand nach Anspruch 1 sowie durch einen Gegenstand gemäß Anspruch 9. Vorteilhafte Ausgestaltungen der Erfindung sind den auf diese Ansprüche rückbezogenen Unteransprüchen sowie der nachfolgenden Beschreibung zu entnehmen.

Erfindungsgemäß ist vorgesehen, dass die Oberflächenstruktur ein Profil mit einer Höhe von 0,1 mm bis 0,5 mm über einer Basisfläche der Seitenfläche aufweist. Durch die Verwendung einer solchen Oberflächenstruktur befinden sich nach einem Einschweißvorgang vermehrt Teile der mit der Seitenfläche verschweißten Folie in einer gegenüber der Hauptzugrichtung abgewinkelten Lage, was insbesondere bei gerundeten oder anderen unscharfe Kanten aufweisenden Oberflächenstrukturen eine Verbesserung der Tragfähigkeit bewirkt. Eine Hauptzugrichtung ist in der Regel eine Richtung parallel zu einer Längsmittelachse des Kanals. Die Basisfläche wird hierbei durch eine Fläche bestimmt, die -betrachtet jeweils lotrecht auf der Seitenfläche- durch den oder die tiefsten Bereiche/Punkte der Seitenfläche führt und ansonsten parallel zu strukturlosen Bereichen der Seitenfläche läuft. Bei einer glatten Seitenfläche würde die Basisfläche durch die Seitenfläche selbst definiert sein und es läge keine erhöhtes Profil vor. Unter Höhe ist hierbei der Abstand einer durch den höchsten Punkt des Profils führenden und parallel zur Basisfläche verlaufenden Fläche zu verstehen. Es handelt sich somit um die maximale Höhe des Profils, welches beispielsweise bei einem im Schnitt wellenförmigen Profil durch den höchsten Punkt auf dem Wellenkamm ausgebildet wird. Weite Teile der Oberflächenstruktur können somit auch eine niedrigere Höhe aufweisen.

Vorteilhafterweise liegen bei einem Schnitt auf der Hälfte der maximalen Höhe des Profils zwischen 30 % und 60 % der Oberflächenstruktur im Schnitt. Das Profil weist somit Berge und Täler/Zwischenräume auf. Bei einem solchen Wert kann die bei einem Einschweiß-Vorgang in die Spitzen des Profils eingeleitete Wärme einerseits gut weitergeleitet werden und kann andererseits zur Verflüssigung der maximal hohen Bereiche des Profils führen, die dann in die Zwischenräume fließen können. Auch hierdurch wird wiederum eine festere Verbindung erzielt, da der verflüssigte Kunststoff eine gute Verbindung mit der anzuschweißenden Folie und dem Kunststoffkörper herstellt.

Vorteilhafterweise weisen zumindest 10% der Oberfläche der Seitenfläche eine erfindungsgemäße Struktur auf, so dass die zum Abreißen des Einschweiß-Ausgießers von dem Folienbeutel benötigten Scherkräfte bereits signifikant gestiegen sind. Demnach sind projiziert auf die Basisfläche mehr als 10 % der Basisfläche von der Oberflächenstruktur bedeckt. Unter eine Projektion wird hierbei eine Projektion entlang einer Vertikalen auf der Basisfläche verstanden. Die Oberflächenstrukturen sind insbesondere quer zu einer Längserstreckung betrachtet gerundet, es kann sich insbesondere um stegartige Strukturen handeln. Vorteilhafterweise liegt die Höhe des Profils zwischen 0,1 mm und 0,3 mm, besonders bevorzugt zwischen 0,12 mm und 0,2 mm. Diese Höhen sind bei den typischerweise verwendeten Folienstärken von 0,05 mm bis 0,5 mm besonders vorteilhaft, da sich bei den durchgeführten Einschweißversuchen hierbei ein Optimum betreffend die Reißfestigkeit ergeben hat.

Vorzugsweise weist das Profil somit von einer Unterseite des Ausgießers, die in der Regel eine quer zur Längsachse des Kanals ausgebildete Fläche darstellt, abgewandte Bereiche auf, d.h. Vorsprünge oder Überhänge bezüglich der Unterseite.

Eine gleichmäßige Einleitung der Kraft in den Ausgießer wird insbesondere durch zumindest einen Längsrücken und/oder Längsfurche ausgebildetes Profil bewirkt. Es beginnt oder endet ein solcher Längsrücken oder eine Längsfurche jeweils im Bereich einer seitlichen Fahne, wobei unter Fahne ein nicht hohler Seitenabschnitt, der durch die seitlich ineinander übergehenden Seitenflächen gebildet wird, gemeint ist. Durch eine solche Quererstreckung entlang einer Unterseite von einer zur anderen Seite eines Ausgießers wird neben einer definierten Krafteinleitung auch die Ausbildung von vertikal verlaufenden Lufteinschlüssen oder vertikal verlaufenen Kanälen wirkungsvoll verhindert. Das erfindungsgemäße Behältnis ist somit zusätzlich abgedichtet.

Es hat sich darüber gezeigt, dass bei einer Ausbildung von Längsrücken und/oder Längsfurchen aufweisenden Profilen entlang der Seitenfläche, die mehrfach umgelenkt werden, d.h. die beispielsweise von einer Links- in eine Rechts- und wieder in eine Linkskurve übergehenden Profile aufweisen, gezeigt, dass die Ausbildung von zu Undichtigkeiten führenden Lufteinschlüssen zusätzlich wirkungsvoll behindert wird. Dies gilt insbesondere für von einer Seite, z.B. einer linken Fahne zu einer rechten Fahne verlaufende Längsrücken- oder -furchen. Durch die Mehrfach-Umlenkung können selbst teilweise gebogene Lufteinschlüsse nicht zu Undichtigkeiten führen.

Erfindungsgemäß verlaufen die Längsrücken oder Längsfurchen wellenförmig von einer Fahne zur anderen Fahne, wobei die Umlenkungsbereiche immer noch einen Krümmungsradius aufweisen, der zumindest der Folienstärke entspricht. Der Krümmungsradius beträgt zumindest mehr als 0,05 mm, um keine zu einer der Hauptbelastungsrichtung der Verbindung Folie-Ausgießer entgegengesetzten Richtung weisende Spitze auszubilden, die im Belastungsfall die Folienstruktur beschädigen kann.

Eine weitere Absicherung gegen die Ausbildung von Undichtigkeiten wird durch eine erfindungsgemäße Ausbildung eines Ausgießers erreicht, der einen Profilabschnitt aufweist, der in Längsrichtung betrachtet zumindest teilweise zu einem weiteren Profilabschnitt benachbart ist, in Querrichtung und längs der Seitenfläche betrachtet diesen teilweise überlappt oder abdeckt. Querrichtung meint hierbei eine Richtung quer, d.h. insbesondere vertikal zu einer Längsmittelachse des Kanals, Längsrichtung eine Richtung längs zu einer Längsachse des Kanals.

So können die Seitenflächen beispielsweise mit spiralförmigen oder L- oder C-förmigen nebeneinanderliegenden Abschnitten versehene Profile aufweisen. Ein erfindungsgemäßer Ausgießer ist weiterhin mit einer Mehrzahl von nebeneinander angeordneten Längsrücken oder Längsfurchen versehen, die bei der vorstehend definierten Höhe quer über die gesamte Seitenfläche laufen und alle auf einer Seite im Bereich einer Fahne beginnen und auf der anderen Seite enden. Durch die Verwendung von Wellen, d.h. beispielsweise sinusförmig ausgebildeten Profilrücken, die dicht an dicht liegen und auch in einer Richtung parallel zu einer Längsmittelachse des Kanals keine scharfen Kanten sondern sanfte und weiche Übergange ausbilden, wird die Dichtigkeit und die Tragkraft der Verbindung eines erfindungsgemäßen Ausgießers mit einem Folienbeutel erfindungsgemäß erhöht.

Um eine gute Integration in den Seitenbereichen, d.h. insbesondere im Bereich der Fahne zu bewirken, können die Profile im Bereich der Fahnen auslaufen, d.h. auch Höhen von weniger als 0,1 mm aufweisen.

Ergänzend zu einer Mehrzahl von Wellen können diese auch eine Mehrzahl von Vertiefungen umranden, in die eine Folie eines Folienbeutels in einem Befestigungsvorgang eingepresst oder gezogen wird.

Durch die Erhöhung der Tragkraft eines erfindungsgemäßen Behältnisses kann eine untere äußere Kante des Kunststoffkörpers, insbesondere des Schiffchens, eine Schwachstelle in Sinne einer Soll-Reißlinie darstellen. Es ist daher vorteilhaft, diese Kante mit einer im Mittel kleineren Krümmung zu versehen als eine obere äußere Kante des Kunststoffkörpers. Alternativ oder ergänzend kann die untere äußere Kante des Schiffchens eine geringere Krümmung aufweisen als eine untere innere Kante des Schiffchens, wobei hierbei die Kanten der das Schiffchen ausbildenden Seitewände gemeint sind. Vorzugsweise nimmt die Krümmung der unteren äußeren Kante der Seitenwand des Schiffchens zu den Seiten z.B. in Richtung etwaiger Fahnen hin zu. Die Krümmung der oberen Kante entspricht der einer üblicherweise bei Ausgießern verwendeten Kante.

Die Abstimmung der Oberflächenstruktur auf die an dem Ausgießer zu befestigende Folie ist erleichtert, wenn der Krümmungsradius einer oder der unteren äußeren Kante zumindest der Höhe des Profils entspricht. Profil und Kante können dann ähnliche Krümmungen aufweisen, die die Integrität des Folienbeutelmaterials eines an dem Ausgießer zu befestigenden Folienbeutels nicht beschädigen.

Die vor- und nachbeschriebenen Vorteile können auch einem erfindungsgemäßen Behältnis zukommen, welches einen Folienbeutel umfassend einen mit diesem verbundenen Ausgießer aufweist, wobei der Ausgießer wie vor- oder nachbeschrieben ausgebildet ist.

Durch einen Verschweißvorgang kann sich das Profil in der Höhe teilweise reduzieren, wird jedoch nicht notwendigerweise komplett verschwinden, so dass auch bei einem Verschweißen am Folienbeutel noch eine gewisse Strukturierung im Bereich der Schweißnaht zu erkennen ist. Durch die sich hierdurch ergebende Umlenkung der Folie ist die Belastbarkeit der Verbindung bei intakter Folie verbessert.

Weitere Vorteile und Einzelheiten der Erfindung lassen sich der nachfolgenden Figurenbeschreibung entnehmen. In den schematischen Darstellungen der Figuren zeigt:
- Fig. 1: einen erfindungsgemäßen Gegenstand in einer Seitenansicht,
- Fig. 2: den Gegenstand nach Fig. 1 in einer Draufsicht,
- Fig. 3: den Gegenstand nach Fig. 2 entlang des Schnitts III-III,
- Fig. 4: einen Ausschnitt des linken unteren Teils des Gegenstands nach Fig. 3,
- Fig. 5: einen weiteren Gegenstand aus dem Stand der Technick,
- Fig. 6: einen weiteren Gegenstand aus dem Stand der Technick.

Gleich oder ähnlich wirkende Teile sind - sofern dienlich - mit identischen Bezugsziffern versehen. Einzelne technische Merkmale der nachfolgend beschriebenen Ausführungsbeispiele können auch mit den Merkmalen der vorbeschriebenen Ausführungsbeispiele zu erfindungsgemäßen Weiterbildungen führen.

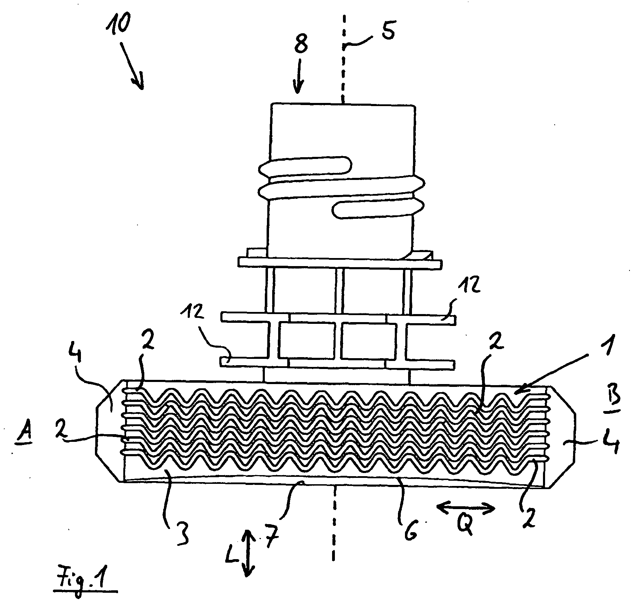

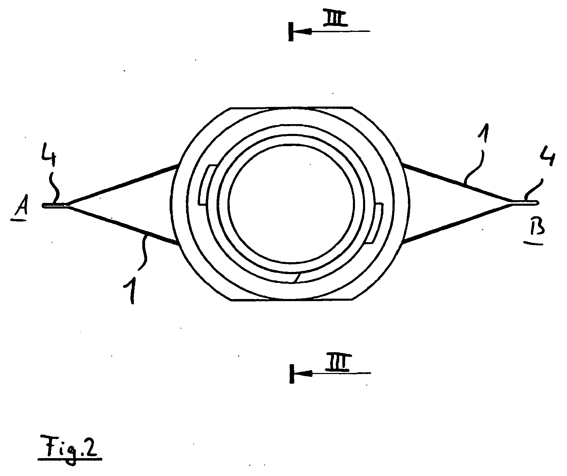

Ein erfindungsgemäßer Ausgießer, der als Einschweiß-Ausgießer ausgebildet ist, weist nach Fig. 2 eine Seitenfläche 1 auf, die ein durch insgesamt sechs Wellenlinien 2 gebildetes Profil aufweist. Die Wellenlinien 2 befinden sich als Längsrücken erhaben auf einer Oberfläche 3, die die Basisfläche der Seitenfläche 1 ausbildet. Die Höhe der Mittelkämme der Längsrücken über der Basisfläche beträgt 0,15 mm. Die Längsrücken beginnen und enden jeweils im Bereich seitlicher Fahnen 4, die gleichzeitig einen Übergangsbereich zwischen der in der Fig. 1 gezeigten Seitenfläche und der nicht dargestellten rückseitigen Seitenfläche ausbilden. Die in der Figur linke Seite stellt eine Seite A dar, während die in der Figur rechte Seite mit B bezeichnet wird.

Durch die mehrfache Umlenkung der annähernd sinusförmigen Längsrücken und deren Quererstreckung von Seite A zu Seit B wird die Ausbildung von in Richtung einer Längsmittelachse 5 eines Kanals verlaufenden Lufteinschlüssen wirkungsvoll verhindert.

Eine Lichtkante 6 zeigt in Richtung der Achse 5 betrachtet den Beginn einer Krümmung der unteren äußeren Kante 7 der Seitenfläche an. Diese läuft zu den Fahnen 4 und mithin zu den Seiten A, B der Seitenflächen aus.

In der Draufsicht nach der Fig. 2 ersichtlich sind die Seitenflächen 1 voneinander weggerichtet und symmetrisch aufgebaut.

Sowohl in Längsrichtung L als auch in Querrichtung Q, d.h. vertikal zur Längsmittelachse 5 betrachtet, überschneiden bzw. überlappen sich entlang der Basisfläche 3 betrachtet die einzelnen Längsrücken. Durch die geschwungene Ausbildung können sowohl Kräfte in Richtung der vertikalen Längsmittelachse wie auch quer dazu gut abgefangen werden. Der Beutel ist besonders sicher und dicht ausgebildet.

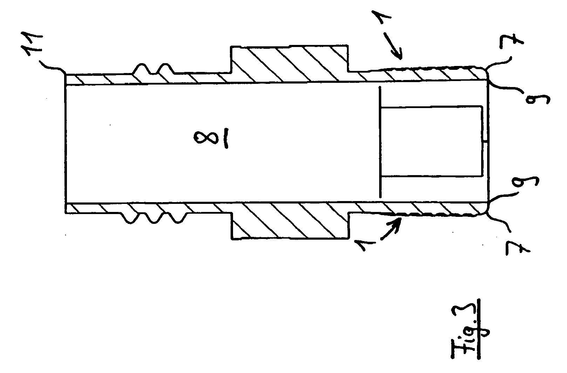

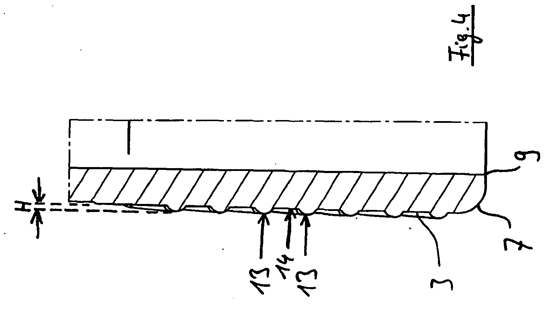

Aus Fig. 3 ersichtlich sind beide Kanten 7 unter außen an den Seitenflächen 1 weniger scharf ausgebildet als die einen inneren Kanal 8, durch den ein Folienbeutel befüllt oder entleert werden kann, begrenzenden Kanten 9 (vgl. auch Fig. 4). Entsprechendes gilt für die obere äußere Kante 11 des Kunststoffkörpers. Darüber hinaus zeigt Fig. 4 die Definition der Höhe H eines insbesondere gerundet ausgebildeten Längsrückens über der Basisfläche 3.

Die wellenförmigen Längsrücken 2 bedecken projiziert auf die Basisfläche (3) mehr als 10 % der Basisfläche (3). In der Fig. 4 sind im vorliegenden Fall rund 30 % der Basisfläche durch die Oberflächenstruktur bedeckt. So können bei einem Einschweiß-Vorgang abschmelzende Spitzen 13 der wellenförmigen Längsrücken zumindest teilweise in die zwischen den Längsrücken befindlichen Täler 14 fließen, deren Grund von der Basisfläche ausgebildet wird. Sofern die Täler 14 schmaler ausgebildet werden würden, könnten vermehrt Längsrücken auf dem Schiffchen ausgebildet werden und im Schnitt auf halber Höhe der (maximalen) Höhe würden mehr als 30 % der Struktur liegen.

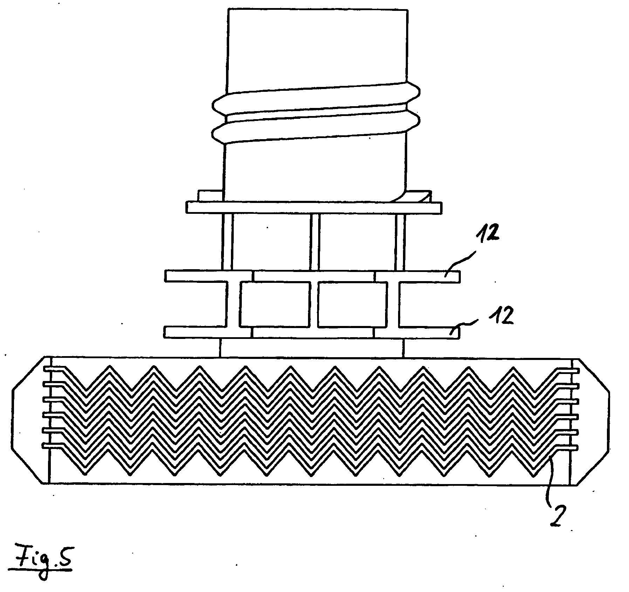

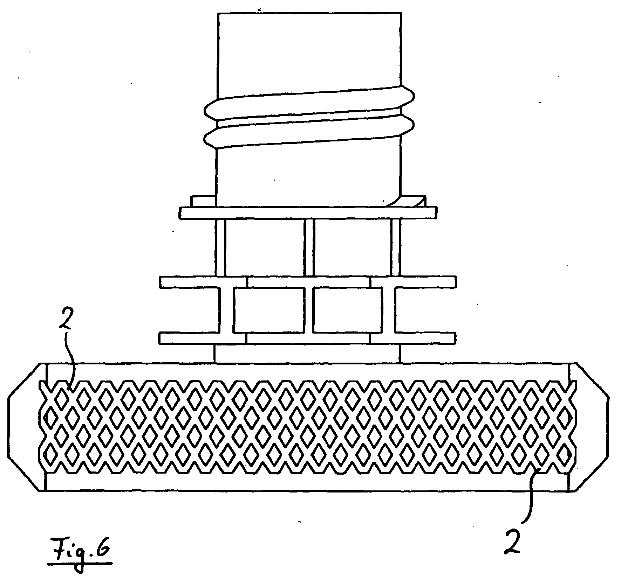

In den Fig. 5 und 6 sind weitere Ausführungsbeispiele aus dem Stand der Technick gezeigt, deren Längsrücken 2 ebenfalls eine Vielzahl von Umlenkungen aufweisen und die im Bereich der Fahnen auslaufen. Fig. 6 zeigt darüber hinaus umrandete Bereiche Besonders die Oberflächenstrukturen der Ausführungsbeispiele nach den Fig. 1 und 5 sind gut geeignet für Ausgießer, die durch Stege 12 ausgebildete Führungsnuten aufweisen. Durch die verbesserte Tragfähigkeit der Verbindung von Ausgießer und Folienbeutel können die über die Stege gehaltenen, bereits befüllten Behältnisse sowohl schneller transportiert als auch schneller und mit größeren Mengen sowie insgesamt sicherer befüllt werden.

## Patentansprüche

1. Ausgießer, insbesondere Einschweiß-Ausgleßer, mit einem einen Kanal (8) zum Befüllen oder Entleeren eines Kunststoffbeutels ausbildenden Kunststoffkörper (10), der Seitenflächen (1) aufweist, die zumindest bereichsweise voneinander weg weisen und an zwei Seiten (A,B) in einer seitlichen Fahne (4) ineinander übergehen, wobei die Seitenflächen (1) zur Verbindung mit einer Kunststofffolie mit einer profilierten Oberflächenstruktur versehen sind, wobei die Oberflächenstruktur ein Profil mit einer Mehrzahl von nebeneinander angeordneten Längsrücken (2) oder Längsfurchen mit einer Höhe (H) zwischen 0,10 mm und 0,5 mm über einer Basisfläche (3) der Seitenfläche (1) umfasst, welche jeweils im Bereich einer seitlichen Fahne (4) beginnen oder enden und entlang der Seitenfläche (1) betrachtet eine mehrfache Umlenkung erfahren **dadurch gekennzeichnet, dass** das Profil eine Mehrzahl von Wellen aufweist, bei denen die Längsrücken (2) oder die Längsfurchen dicht an dicht in Wellen liegen, die in Richtung parallel einer Längsmittelachse (5) des Ausgießers weiche Übergänge an den Umlenkungen mit einem Krümmungsradius von zumindest 0,05 mm aufweisen.

2. Ausgießer nach Anspruch 1, **dadurch gekennzeichnet, dass** sich ein Profilabschnitt mit einem in Längsrichtung (L) benachbarten Profilabschnitt in Querrichtung (Q) und längs der Seitenfläche (1) betrachtet mit diesem teilweise überlappt.

3. Ausgießer nach einem der vorherigen Ansprüche, **dadurch gekennzeichnet, dass** das Profil in den Fahnen (4) der Seitenflächen (1) ausläuft.

4. Ausgießer nach einem der vorherigen Ansprüche, **dadurch gekennzeichnet, dass** projiziert auf die Basisfläche (3) mehr als 10% der Basisfläche (3) von der Oberflächenstruktur bedeckt sind.

5. Ausgießer nach einem der vorherigen Ansprüche, **dadurch gekennzeichnet, dass** eine untere äußere Kante (7) des Kunststoffkörpers (10) eine kleinere Krümmung aufweist als eine obere äußere Kante des Kunststoffkörpers (10).

6. Ausgießer nach Anspruch 5, **dadurch gekennzeichnet, dass** die untere äußere Kante (7) der Seitenfläche (1) eine geringere Krümmung aufweist als eine untere innere Kante (9) des Kunststoffkörpers (10).

7. Ausgießer nach Anspruch 5 oder 6, **dadurch gekennzeichnet, dass** die Krümmung einer (der) unteren äußeren Kante (7) der Seitenfläche (1) zu den Seiten hin zunimmt.

8. Ausgießer nach Anspruch 5, 6 oder 7, **dadurch gekennzeichnet, dass** der Krümmungsradius einer (der) unteren äußeren Kante (7) zumindest der Höhe (H) des Profils entspricht.

9. Behältnis umfassend einen Folienbeutel und einen mit diesem verbundenen Ausgießer, **dadurch gekennzeichnet, dass** der Ausgießer nach einem der vorherigen Ansprüche ausgebildet ist.

10. Behältnis nach Anspruch 9, **dadurch gekennzeichnet, dass** durch einen Einschweiß-Vorgang das Profil in der Höhe reduziert wurde.

## Claims

1. Spout, in particular a welded spout, comprising a plastics body (10) which forms a channel (8) for filling or emptying a plastics pouch and comprises lateral surfaces (1) that point away from one another, at least in regions, and transition into one another at two sides (A, B) in a lateral lug (4), the lateral surfaces (1) being provided with a profiled surface structure in order to be connected to a plastics foil, the surface structure having a profile having a plurality of elongate ridges (2) or elongate grooves arranged next to one another which have a height (H) of between 0.10 mm and 0.5 mm above a base surface (3) of the lateral surface (1) and which in each case begin or end in the region of a lateral lug (4) and, viewed along the lateral surface (1), are deflected multiple times, **characterised in that** the profile has a plurality of undulations in which the elongate ridges (2) or the elongate grooves are tightly packed in undulations which, in the direction parallel to a longitudinal central axis (5) of the spout, have smooth transitions to the deflections having a radius of curvature of at least 0.05 mm.

2. Spout according to claim 1, **characterised in that** a profile portion having a profile portion that is adjacent in the longitudinal direction (L) partially overlaps said adjacent profile portion when viewed in the transverse direction (Q) and along the lateral surface (1).

3. Spout according to either of the preceding claims, **characterised in that** the profile tapers into the lugs (4) of the lateral surfaces (1).

4. Spout according to any of the preceding claims, **characterised in that**, when projected onto the base surface (3), more than 10 % of the base surface (3) is covered by the surface structure.

5. Spout according to any of the preceding claims, **characterised in that** a lower external edge (7) of the plastics body (10) has a smaller curvature than an upper external edge of the plastics body (10).

6. Spout according to claim 5, **characterised in that** the lower external edge (7) of the lateral surface (1) has a smaller curvature than a lower internal edge (9) of the plastics body (10).

7. Spout according to either claim 5 or claim 6, **characterised in that** the curvature of a (the) lower external edge (7) of the lateral surface (1) increases towards the sides.

8. Spout according to claim 5, 6 or 7, **characterised in that** the radius of curvature of a (the) lower external edge (7) corresponds at least to the height (H) of the profile.

9. Container comprising a foil pouch and a spout connected thereto, **characterised in that** the spout is formed according to any of the preceding claims.

10. Container according to claim 9, **characterised in that** the height of the profile has been reduced by a welding process.

## Revendications

1. Bec verseur, en particulier bec verseur de soudage, comportant un corps (10) en matière plastique qui forme un canal (8) destiné à remplir ou vider une poche en matière plastique et qui possède des surfaces latérales (1) qui sont dirigées à l'opposé l'une de l'autre au moins par endroits et se fondent l'une dans l'autre au niveau de deux côtés (A, B) en une patte latérale (4), les surfaces latérales (1) étant pourvue d'une structure de surface profilée pour la liaison à un film de matière plastique, la structure de surface présentant un profilé pourvu d'une pluralité de crêtes longitudinales (2) ou de rainures longitudinales, disposées les unes à côté des autres, d'une hauteur (H) comprise entre 0,10 mm et 0,5 mm sur une surface de base (3) de la surface latérale (1) qui commencent ou se terminent dans la zone d'une patte latérale (4), et subissent une pluralité de déviations lorsque l'on regarde le long de la surface latérale (1), **caractérisé en ce que** le profilé présente une pluralité d'ondulations dans lesquelles les crêtes longitudinales (2) ou les rainures longitudinales portent les unes contre les autres dans les ondulations qui comportent, dans la direction parallèle à un axe central longitudinal (5) du bec verseur, des transitions souples au niveau des déviations avec un rayon de courbure d'au moins 0,05 mm.

2. Bec verseur selon la revendication 1, **caractérisé en ce qu'**une section de profilé et une section de profilé, adjacente dans la direction longitudinale (L), se chevauchent partiellement lorsque l'on regarde dans la direction transversale (Q) et le long de la surface latérale (1).

3. Bec Verseur selon l'une des revendications précédentes, **caractérisé en ce que** le profilé se termine par les pattes (4) des surfaces latérales (1).

4. Bec verseur selon l'une des revendications précédentes, **caractérisé en ce que**, en projection sur la surface de base (3), de plus de 10% de la surface de base (3) sont recouverts par la structure de surface.

5. Bec verseur selon l'une des revendications précédentes, **caractérisé en ce qu'**un bord extérieur inférieur (7) du corps (10) en matière plastique présente une courbure inférieure à celle d'un bord extérieur supérieur du corps en matière plastique (10).

6. Bec verseur selon la revendication 5, **caractérisé en ce que** le bord extérieur inférieur (7) de la surface latérale (1) présente une courbure inférieure à celle d'un bord interne inférieur (9) du corps (10) en matière plastique.

7. Bec verseur selon la revendication 5 ou 6, **caractérisé en ce que** la courbure d'un (du) bord extérieur inférieur (7) de la surface latérale (1) augmente en direction des côtés.

8. Bec verseur selon la revendication 5, 6 ou 7, **caractérisé en ce que** le rayon de courbure d'un (du) bord extérieur inférieur (7) correspond au moins à la hauteur (H) du profilé.

9. Récipient comprenant une poche formée par un film et un bec verseur qui est raccordé à celle-ci, **caractérisé en ce que** le bec verseur est conçu selon l'une quelconque des revendications précédentes.

10. Récipient selon la revendication 9, **caractérisé en ce que** le profilé a été réduit en hauteur par un procédé de soudage.
